# EUROPÄISCHE PATENTANMELDUNG

(11) **EP 1 329 428 A1**
(43) Veröffentlichungstag der Anmeldung: **23.07.2003**
(21) Anmeldenummer: 02001436.1
(22) Anmeldetag: 21.01.2002
(51) Int. Cl.: C03B 9/34

(54) **Nahtlose Hohlglasherstellung**

(71) Anmelder: Heinz-Glas GmbH, 96355 Tettau-Kleintettau (DE)
(72) Erfinder: Stärker, Jens, 96337 Ludwigsstadt (DE); Jungkunz, Wilfried, 96358 Teuschnitz (DE)
(74) Vertreter: Zipse + Habersack

(57) **Zusammenfassung**

Die Erfindung betrifft ein Verfahren zur Herstellung eines eine Mündung, z.B. ein Gewinde, aufweisenden Hohlglasproduktes (31) auf einer IS-Maschine, mit
- einem Vorformvorgang, bei dem ein, zumindest den überwiegenden Teil der Außenwand des Vorformlings bildendes einteiliges Vorformteil (16) auf ein die Mündung des Vorformlings bildendes - insbesondere mehrteiliges - Mündungsvorformteil (18) aufgesetzt wird,
- ein Glasposten (12) der Vorform (10) zugeführt wird,
- in der Vorform ein Vorformling (24) erzeugt wird,
- anschließendes Überführen des Vorformlings (24) in eine Fertigform (40), die ein einteilig ausgebildetes Formteil (32) umfaßt, das den genannten überwiegenden Teil der Außenwand (34) des Hohlglasproduktes (31) beim Blasen umschließt,
- Blasen des Vorformlings (24) in die Fertigform, und
Auswerfen des Hohlglasproduktes (31). Die Erfindung betrifft weiterhin eine Vorrichtung zur Herstellung eines eine Mündung enthaltenden Hohlglasproduktes.

## Beschreibung

Die vorliegende Erfindung betrifft ein Verfahren und eine Vorrichtung zur Herstellung von eine Mündung aufweisenden Hohlglasprodukten ohne Axialnaht.

Bislang bestehen bei der Herstellung von einer Mündung enthaltenden Hohlglasprodukten auf I.S.-Maschinen, z.B. im Preß-Blas-Verfahren oder Blas-Blas-Verfahren, die Vorformen als auch die Fertigformen im axialen Bereich des Hohlglasproduktes aus zwei radial gegeneinander verfahrbaren Halbschalen, an deren Kontaktlinie im Endprodukt eine kleine Naht auftritt. Zur Vermeidung dieser Naht sind Verfahren und Vorrichtungen entwickelt worden, bei denen die Form relativ zum Produkt gedreht wird, was zu einem Fortfall der Nähte beim Fertigprodukt führt. Diese Verfahren als auch Vorrichtungen sind jedoch aufwändig.

Es ist daher Aufgabe der Erfindung, ein Verfahren und eine Vorrichtung zur Herstellung eines eine Mündung aufweisenden Hohlglasproduktes auf einer I.S.-Maschine zu schaffen, die eine einfache Herstellung der Hohlglasprodukte ohne Axialnähte im überwiegenden Sichtbereich, d.h. auf der Außenwandung mit geringem Aufwand gestatten.

Diese Aufgabe wird durch ein Verfahren gemäß Anspruch 1 und eine Vorrichtung gemäß Anspruch 4 gelöst. Vorteilhafte Weiterbildungen der Erfindung sind Gegenstand der zugeordneten Unteransprüche.

Erfindungsgemäß wird der Vorformling in eine Vorform gepresst oder geblasen, die aus einem einteiligen Vorformteil, das zumindest den überwiegenden Teil, vorzugsweise den gesamten Teil der Außenwand des Hohlglasproduktes umschliesst, als auch aus einem vorzugsweise mehrteiligen Mündungsvorformteil besteht. Der Vorformling wird geformt z.B. durch Blasen oder Einfahren eines Press-Stempels in die Vorform durch den Mündungsteil nach dem Zuführen des Glaspostens, wonach der Vorformling in die Fertigform überführt wird, die ebenfalls in dem die Außenwand des Hohlglasproduktes umschliessenden Teil einteilig ist, wonach der Vorformling in die Fertigform zur Herstellung des Fertigproduktes eingeblasen wird. Anschließend wird das Fertigprodukt ausgeworfen.

Bei diesem Herstellungsvorgang wird die Außenwand oder zumindest der wesentliche Teil der Außenwand nur durch eine einteilige, das Hohlglasprodukt umgebende Form gebildet, wodurch axiale Nähte im entsprechenden Bereich des Hohlglasproduktes vermieden werden. Eine derartige Vorrichtung, umfassend einteilige, die Außenwand des Hohlglasproduktes umschliessende Vorformen als auch Fertigformen sind mit relativ geringem Aufwand herzustellen und erlauben somit auf kostengünstige Weise die Herstellung der Hohlglasprodukte auf der I.S.-Maschine ohne großen Aufwand.

Vorzugsweise wird der Vorformling mittels des Mündungsvorformteils der Vorform in die Fertigform überführt, was den Vorteil hat, dass das Mündungsteil des Vorformlings zum Überführen des Vorformlings nicht von einer separaten Vorrichtung nach dem Entfernen des Mündungsvorformteiles umgegriffen werden muss. Die Überführung von der Vorform in die Fertigform kann somit äußerst schnell realisiert werden. Durch die insbesondere mehrteilige Ausbildung des Mündungsvorformteiles kann das Vorformteil durch radiales Abziehen der mehreren Mündungsvorformteile leicht gelöst und für die Bildung eines neuen Vorformlings wieder in die Vorform überführt werden.

Vorzugsweise ist der Bodenbereich in der Fertigform als Press-Stempel ausgebildet, so dass das Hohlglasprodukt nach dem Blasen in axialer Richtung durch den Press-Stempel aus der Fertigform ausgeworfen oder zu einer Greifvorrichtung überführt werden kann. Auch diese Ausbildung der Fertigform der 1.5.-Maschine ermöglicht eine schnellere und sehr ökonomische Produktion der Hohlglasprodukte.

Die Erfindung wird nachfolgend beispielsweise anhand der schematischen Zeichnung beschrieben. In dieser zeigen:
- Figuren 1a - 1c: die Herstellung des Vorformlings in der Vorform,
- Figur 2: das Überführen des Vorformlings anhand des Mündungsvorformteiles in die Fertigform und
- Figur 3: die Fertigform auf der linken Seite in Blasstellung auf der rechten Hälfte in Ausstoßstellung.

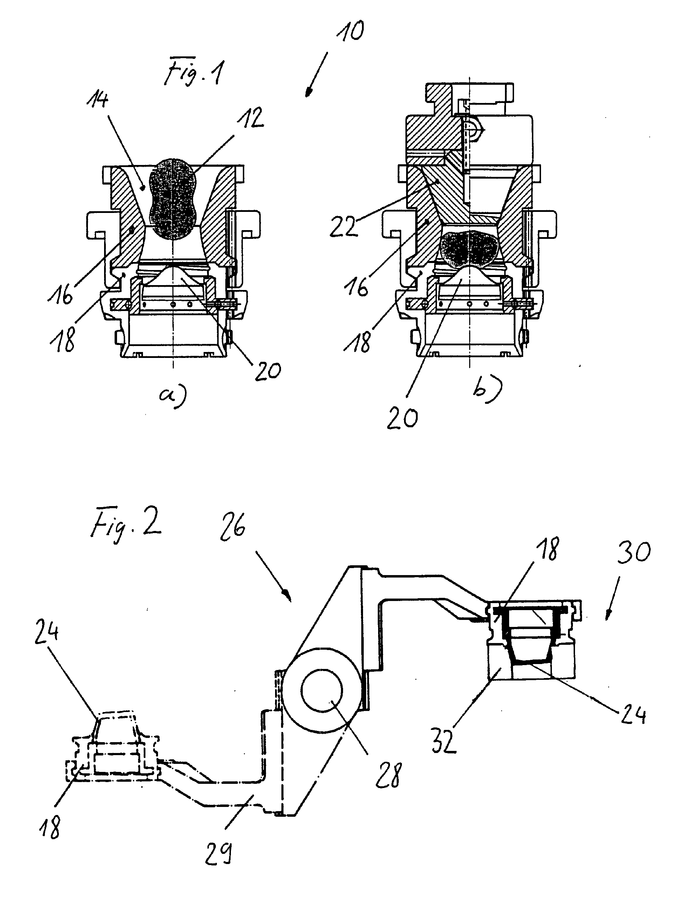

Figur 1 zeigt die Vorform 10 einer I.S.-Maschine zum Pressblasen von mit einer Mündung in Form eines Gewindes versehenen Glaskosmetiktöpfchen. Der Glasposten 12 wird in dem in Figur 1a gezeigten Füllvorgang durch eine Füllöffnung 14 in die Vorform 10 eingeführt, welche Vorform 10 aus einen den Glasposten 12 einstückig umgebenden Mantel 16 und aus einem zweiteiligen Mündungsvorformteil 18 besteht. An der Mündungsseite der Vorform 10 ist ein Press-Stempel 20 vorgesehen.

Figur 1b zeigt die Press-Stellung der Vorform 10, bei welcher der Press-Stempel 20 in die Vorform und somit in den Glasposten 14 eingedrückt wird, wodurch der Glasposten an dem Mantelformteil 16, dem Mündungsformteil 18 und einem Bodenteil 22 anliegt, das nach dem Einfüllen des Glaspostens die Füllöffnung verschließt. Hierdurch wird der in Figur 2 dargestellte Vorformling 24 gebildet.

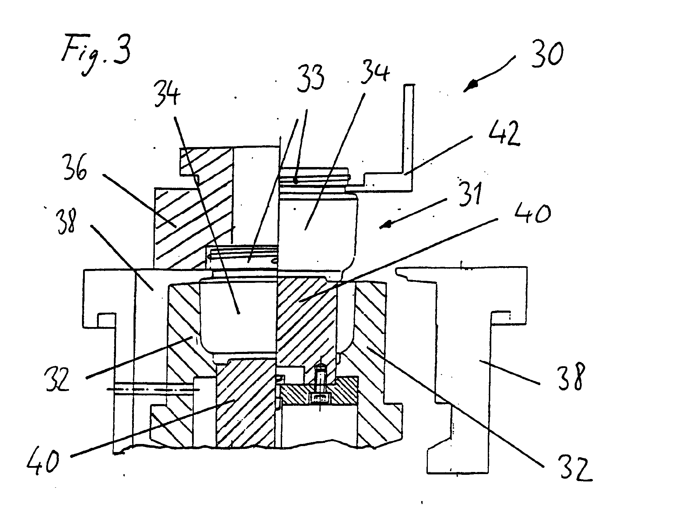

Figur 2 zeigt einen Schwenkmechanismus zum Überführen des Vorformlings 24 von der Vorform 10 in eine Fertigform 30. Der Schwenkmechanismus 26 besteht aus einer Schwenkwelle 28, an welcher ein Schwenkarm 29 gehalten ist. Am freien Ende trägt der Schwenkarm 29 das Mündungsvorformteil 18, mittels dessen der Vorformling 24 von der Vorform 10 in die Fertigform 30 überführt wird. Die Fertigform 30 weist, wie in Figur 3 noch näher dargestellt wird, ein einstückiges Mantelteil 32 auf, welches die Außenseite bzw. den Außenmantel des Vorformlings 24 vollständig umschließt.

Figur 3 zeigt die Fertigform 30 zur Herstellung eines kosmetischen Glasdöschens 31 mit Gewinde 33. Die linke Hälfte der Figur zeigt die Blasstellung, bei der das zu bildende Glasprodukt mit seiner Außenwand 34 flächig an einer einstückigen Mantelform 32 anliegt, die die Außenwand 34 des Glasdöschens 31 vollständig umschließt. Der Bereich der Mündung 33 und der Halsbereich zwischen Mündung 33 und Außenwand 34 werden durch zwei weitere Formteile 36, 38 gebildet, die mehrstückig ausgebildet sind und nach dem Blasen der Form radial voneinander wegbewegt werden, wodurch das Glasprodukt 31 nach oben hin freigegeben wird. Bodenseitig liegt das Produkt während des Blasvorgangs an einem Bodenformteil 40 an, das anschließend bei dem auf der rechten Seite dargestellten Ausstoßvorgang als Press-Stempel dient, um das Produkt 31 in axialer Richtung aus der Fertigform 30 herauszufahren, so dass es von einer Greifvorrichtung 42 gegriffen werden kann. Durch die Tatsache, dass das Mantelformteil 32 der Fertigform 30 die Außenwand 34 des Produktes einstückig vollständig umschließt, werden jegliche Nähte in axialer Richtung vermieden. Das Vorhandensein von axialen Nähten im Gewindebereich 33 bzw. im Halsbereich zwischen der Außenwand 34 und dem Gewinde 33 stören den Gesamteindruck des Döschens 31, das insbesondere für kosmetische Anwendungen konzipiert ist, nicht weiter. Durch den sehr einfachen Ausstoßvorgang kann die Fertigform 30 nach dem Blasen des Produktes schnell entleert werden und steht somit entsprechend schnell wieder für einen weiteren Befüllvorgang zur Verfügung, nachdem der Press-Stempel 40, der vorzugsweise den Bodenteil der Fertigform 30 integriert hat, wieder in seine, auf der linken Seite gezeigte Blasstellung zurückgefahren ist.

## Patentansprüche

1. Verfahren zur Herstellung eines eine Mündung, z.B. ein Gewinde, aufweisenden Hohlglasproduktes (31) auf einer IS-Maschine, mit
- einem Vorformvorgang, bei dem ein, zumindest den überwiegenden Teil der Außenwand des Vorformlings bildendes einteiliges Vorformteil (16) auf ein die Mündung des Vorformlings bildendes - insbesondere mehrteiliges - Mündungsvorformteil (18) aufgesetzt wird,
- ein Glasposten (12) der Vorform (10) zugeführt wird,
- in der Vorform ein Vorformling (24) erzeugt wird,
- anschließendes Überführen des Vorformlings (24) in eine Fertigform (40), die ein einteilig ausgebildetes Formteil (32) umfaßt, das den genannten überwiegenden Teil der Außenwand (34) des Hohlglasproduktes (31) beim Blasen umschließt,
- Blasen des Vorformlings (24) in die Fertigform, und
Auswerfen des Hohlglasproduktes (31).

2. Verfahren nach Anspruch 1,
bei dem der Vorformling mittels des Mündungsvorformteils (18) in die Fertigform überführt wird.

3. Verfahren nach Anspruch 1 oder 2,
bei dem das Fertigprodukt (31) durch einen die Bodenunterseite des Produkts bildenden Teil (40) der Fertigform in axialer Richtung zumindest teilweise aus der Fertigform ausgestoßen wird.

4. Herstellungsvorrichtung des I.S.-Typs für eine Mündung aufweisende Hohlglasprodukte umfassend,
eine Glaspostenzuführung zu einem Vorformmechanismus,
einen Vorformmechanismus (10) zur Bildung eines Vorformlings (24) aus dem Glasposten (12)
einen Übergabemechanismus (26) für den Transfer des Vorformlings vom Vorformmechanismus in einen Fertigformmechanismus ,
einen eine Fertigform (30) aufweisenden Fertigformmechnismus zur Bildung des Fertigprodukts und
einem Auswerf- bzw. Entnahmemechanismus (40,42) für das Fertigprodukt aus der Fertigform,
wobei
- der Vorformmechanismus ein einteiliges Vorformteil (16) aufweist, das zumindest den einen überwiegenden Teil der Außenwand des zu pressenden Vorformlings (24) vollständig umschließt,
- ein die Mündung umgebendes -vorzugsweise mehrteiliges - Mündungsvorformteil (18)
- einen Übertragungsmechanismus (26) zum Übertragen des Vorformlings von dem Vorformmechanismus zu einem Fertigformmechanismus,
- einen Fertigformmechanismus mit einer einteiligen Fertigform (30), die zumindest den überwiegenden Teil der Außenwand (34) des zu blasenden Hohlglasproduktes (31) vollständig umschließt.

5. Herstellungsvorrichtung nach Anspruch 4, bei der der Fertigformmechanismus einen axial in Richtung der Mündungsachse verfahrbaren Ausstoßstempel (40) aufweist, der das Fertigprodukt vom Boden aus aus der Fertigform (30) ausstößt.

6. Herstellungsvorrichtung nach Anspruch 4 oder 5, bei der die Ausstoßfläche des Stempels (40) den Bodenbereich der Fertigform (30) bildet.

7. Herstellungsvorrichtung nach Anspruch 4, 5 oder 6, bei der der Übertragungsmechanismus (26) zum Greifen des Mündungsvorformteils (18) ausgebildet ist oder das Mündungsvorformteil mit dem Übertragungsmechanismus verbunden ist.

8. Herstellungsvorrichtung nach Anspruch 4, 5, 6 oder 7, bei der sowohl das Vorformteil (16) als auch das Fertigformteil (32) den gesamten axialen Außenwandbereich (34) des Hohlglasproduktes umschließen.
